# FASCICULE DE BREVET EUROPEEN

(11) **EP 1 616 445 B1**
(45) Date de publication et mention de la délivrance du brevet: **20.09.2006**
(21) Numéro de dépôt: 04714824.2
(22) Date de dépôt: 26.02.2004
(51) Int. Cl.: H04Q 7/34

(54) **SYSTEME ET PROCEDE DE TEST D UN RESEAU DE TELEPHONIE MOBILE**
TESTSYSTEM UND -VERFAHREN FÜR EIN MOBILFUNKNETZ
SYSTEM AND METHOD FOR TESTING A MOBILE TELEPHONE NETWORK

(30) Priorité: 22.04.2003 FR 0350120
(43) Date de publication de la demande: 18.01.2006
(73) Titulaire: SAGEM Communication, 75015 Paris (FR)
(72) Inventeur: BUYSE, Olivier, F-78700 Conflans Ste Honorine (FR)
(74) Mandataire: Camus, Olivier Jean-Claude
(86) Numéro de dépôt international: PCT/FR2004/050085
(87) Numéro de publication internationale: WO 2004/095866

(56) Documents cités:
- EP-A- 1 182 897
- WO-A-99/23849
- US-A- 5 471 649
- US-B1- 6 169 896
- US-B1- 6 434 364
- "Digital cellular telecommunications system (Phase 2);Radio subsystem link control (GSM 05.08)" EUROPEAN TELECOMMUNICATION STANDARD, XX, XX, 31 janvier 1997 (1997-01-31), pages 1-37, XP002111809

## Description

### Domaine de l'invention

L'invention concerne un procédé et un système de test d'un réseau de téléphonie mobile, dans lequel on force les paramètres de sélection ou resélection afin d'optimiser le réseau de téléphonie mobile, ou réseau cellulaire. Le procédé de l'invention consiste à évaluer le dimensionnement géographique des différentes cellules du réseau cellulaire, pour différentes valeurs des paramètres de sélection et de resélection. Il permet de déterminer les valeurs de paramètres donnant au réseau la configuration optimum souhaitée. Le système de l'invention permet de mettre en oeuvre ce procédé.

L'invention trouve des applications dans le domaine de la téléphonie mobile et, en particulier, dans le domaine de la maintenance et de l'optimisation des réseaux de téléphonie mobile.

### Etat de la technique

En téléphonie mobile, on utilise des réseaux, appelés réseaux cellulaires ou réseaux de téléphonie mobile, pour mettre en relation des téléphones mobiles avec d'autres terminaux téléphoniques fixes ou mobiles. Ces réseaux cellulaires comportent des stations de base qui gouvernent chacune des cellules géographiques et permettent, par leur intermédiaire, une mise en relation des téléphones mobiles qui se trouvent dans ces cellules avec d'autres téléphones pouvant se trouver hors de ces cellules.

Pour que la liaison radio entre le téléphone mobile et le réseau soit de qualité satisfaisante, l'opérateur du réseau place un ensemble de stations de base sur le territoire à couvrir, de sorte que le téléphone mobile soit toujours à moins de quelques kilomètres de l'une de ces stations de base. Pour cela, le territoire est divisé en plusieurs cellules qui constituent chacune une surface sur laquelle un téléphone mobile peut établir une liaison avec une station de base.

D'une façon générale, l'opérateur du réseau cherche à réaliser la couverture du territoire par un ensemble de cellules contiguës et pouvant se recouvrir, au moins en partie, les unes et les autres. La taille des cellules et leur positionnement les unes par rapport aux autres, c'est-à-dire le dimensionnement des cellules, dépend du nombre des communications qui doivent pouvoir être établies simultanément dans une même cellule. Ainsi, dans les zones urbaines particulièrement denses en communications téléphoniques mobiles, l'opérateur choisit des petites cellules avec un rayon de l'ordre de quelques centaines de mètres, pour écouler un trafic important par unité de surface. Au contraire, dans les zones rurales peu denses en communications téléphoniques, les cellules sont de tailles plus importantes avec un rayon de l'ordre de quelques kilomètres.

Pour tenir compte de ces différents critères, l'opérateur réalise tout d'abord une carte de réseau théorique sur laquelle il place les stations de base aux endroits les plus favorables et dimensionne la taille des cellules et le chevauchement des cellules entre elles. Cependant, sur le terrain, la taille des cellules ne correspond pas nécessairement à ce que laisse prévoir la carte de réseau théorique. L'opérateur cherche alors à optimiser le réseau pour le faire ressembler le plus possible à la carte de réseau théorique ou pour supprimer des problèmes qui n'auraient pas été prévus dans le modèle théorique.

De plus, la densité du trafic est un critère qui fluctue au cours du temps. Il est fonction de différents facteurs, comme les périodes de vacances pendant lesquelles le trafic diminue dans les zones urbaines et augmente en bordure de mer ou en montagne. Il est donc important, pour l'opérateur, non seulement d'optimiser son réseau, mais également de vérifier si l'optimisation est toujours valide et, le cas échéant, de modifier le dimensionnement des cellules pour rendre cette optimisation valide. Le dimensionnement des cellules peut être optimisé en modifiant des paramètres propres à chaque cellule et appelés paramètres de sélection et paramètres de resélection.

Pour permettre cette optimisation, des outils de test des réseaux de téléphonie mobile ont été développés.

Les systèmes décrits dans les demandes de brevets EP1182897, EP1098546, US20020155831, US 6169896 ou US 5471649 sont des exemples parmi d'autres.

Ces outils de test permettent, après exploration des zones à étudier, de déterminer la taille de chaque cellule. Ces appareils de test sont, en pratique, des téléphones mobiles associés à un microordinateur qui enregistre le long du parcours les paramètres de fonctionnement relatifs à l'environnement cellulaire et à la qualité de signal et de service.

Actuellement, pour effectuer cette optimisation, l'opérateur utilise un système de test comportant un ou plusieurs mobiles de test utilisés en association avec le centre de contrôle du réseau. Le téléphone de test est embarqué par son utilisateur, par exemple, dans un véhicule de type automobile. Il circule ainsi dans les zones géographiques correspondant aux cellules dont l'utilisateur veut optimiser le découpage cellulaire et pour cela, les paramètres de sélection et resélection. Pour chaque cellule de la zone géographique à mesurer, et pour chaque paramètre ou ensemble de paramètres de sélection ou resélection à essayer, l'opérateur doit téléphoner au centre de contrôle du réseau et demander, à ce centre, de modifier les paramètres de sélection ou resélection pour les cellules dans lesquelles il se déplace. A chaque modification de paramètres, l'utilisateur doit se déplacer dans les cellules et collecter les données de couverture puis analyser les résultats obtenus. Si ces résultats ne conviennent pas, il doit de nouveau téléphoner au centre de gestion du réseau pour demander une nouvelle modification de paramètres puis refaire un parcours de collecte de données et faire l'analyse des nouveaux résultats.

Cette technique est une méthode par tâtonnement qui nécessite une coordination contraignante entre l'utilisateur et le centre de contrôle du réseau (OMC : Operation and maintenance center) ; en effet, l'utilisateur doit transmettre la liste des paramètres à configurer pour les différentes cellules à vérifier. Cette opération est fastidieuse, elle peut être faussée par des erreurs de saisie que l'utilisateur ne peut contrôler et surtout, elle entraîne une perturbation de tout le réseau, à chaque modification d'un paramètre par le centre de gestion du réseau, et peut provoquer une mauvaise qualité de service lors des essais des différentes valeurs de paramètres

### Exposé de l'invention

L'invention a justement pour but de remédier aux inconvénients des techniques exposées précédemment. A cette fin, elle propose un système et un procédé de test autonomes d'un réseau de téléphonie mobile permettant de forcer les paramètres de sélection et resélection des cellules du réseau, à partir d'un ordinateur connecté au téléphone mobile de test. L'invention permet ainsi de simuler uniquement au niveau du mobile de test une modification des paramètres de sélection et resélection du réseau et permet de mesurer les effets d'une telle modification sans intervention du centre de contrôle et sans aucune perturbation du réseau.

Plus précisément, l'invention concerne un système de test d'un réseau de téléphonie mobile ayant une pluralité de cellules dont le dimensionnement est fonction d'au moins un paramètre de sélection ou resélection, du type de ceux comportant un ou plusieurs téléphones mobiles de test, et un ordinateur embarqué connecté au(x) téléphone(s) mobile(s). Elle a essentiellement pour objet un système dans lequel des valeurs prédéfinies des paramètres de sélection et de resélection sont mémorisées dans l'ordinateur et dans lequel le(s) téléphone(s) mobile(s) comporte(nt) une fonction de forçage pour recevoir la valeur prédéfinie des paramètres de sélection et resélection.

L'invention concerne également un procédé de test d'un réseau de téléphonie mobile ayant une pluralité de cellules dont le dimensionnement est fonction d'au moins un paramètre de sélection ou resélection, caractérisé en ce qu'il comporte les étapes suivantes :
- enregistrement, dans l'ordinateur, de valeurs prédéfinies des paramètres de sélection et resélection pour chaque cellule de la zone à tester,
- forçage, pour chaque cellule de la zone à tester, des valeurs prédéfinies des paramètres de sélection et resélection, et capture des données obtenues par le téléphone mobile pour chaque cellule,
- traitement des données capturées et détermination du dimensionnement de chaque cellule testée.

### Brève description des dessins

La figure 1 représente un système de test d'un réseau de téléphonie mobile, conforme à l'invention.

La figure 2 représente un diagramme fonctionnel des différentes étapes du procédé de l'invention.

### Description détaillée de modes de réalisation de l'invention

Dans un réseau de téléphonie mobile et, en particulier, dans un réseau selon la norme GSM, un téléphone mobile est à l'écoute du réseau et effectue la sélection, parmi toutes les cellules qui l'entoure, de la meilleure cellule, c'est-à-dire celle qui lui assure la meilleure qualité de réception et de transmission. Le téléphone mobile se cale alors, ou se campe, sur cette meilleure cellule. Cette cellule est appelée la serveuse. Il mesure ensuite les autres cellules qu'il peut recevoir, et tient à jour la liste des six meilleures cellules appelées voisines. Le changement de serveuse est appelé re-sélection ; il se fait parmi les 6 meilleures voisines selon un algorithme défini par la norme GSM 05.08 et qui prend en compte les critères C1, C2 pour le GSM et C1, C31, C32 pour le GPRS.

En d'autres termes, les paramètres de sélection et de resélection sont les paramètres qui permettent de modifier le dimensionnement géographique de chaque cellule du réseau.

Le coefficient C1 est calculé par le téléphone mobile en fonction de plusieurs paramètres et, en particulier, en fonction du niveau de réception RX_LEV et d'un seuil RXLEV_ACCESS_MIN. Le niveau de réception RX_LEV est le niveau du signal qu'il reçoit sur son antenne. Le seuil RXLEV_ACCESS_MIN est la valeur de pondération, particulière à chaque cellule, appliquée par l'opérateur sur le niveau de réception RX_LEV. Le coefficient C1 est calculé en première approximation selon la formule suivante : C1 = RX_LEV - RXLEV_ACCESS_MIN.

Les valeurs suivantes interviennent également dans le calcul exact du C1 : MS_TXPWR_MAX_CCH, POWER OFFSET, (les formules exactes de calcul des paramètres C1 et C2 sont indiquées et explicitées dans la norme GSM 04.08).

Le coefficient C2 est calculé par le téléphone mobile en fonction de plusieurs paramètres et, en particulier, en fonction de C1, d'une temporisation PENALTY_TIME, d'une pénalisation TEMPORARY OFFSET et d'un décalage CELL_RESELECT_OFFSET. La pénalisation TEMPORARY OFFSET est une minoration appliquée au coefficient C2 pendant la durée de la temporisation PENALTY_TIME pour une cellule qui entre dans la liste des six voisines. Le décalage CELL_RESELECT_OFFSET est un décalage appliqué au paramètre de sélection pour la cellule. La formule exacte de calcul est également donnée dans la norme GSM 05.08.

Pour optimiser le réseau, l'opérateur a la possibilité de modifier un ou plusieurs paramètres de sélection permettant de calculer C1 et C2, c'est-à-dire RX_LEV_ACCESS_MIN, MS_TXPWR_MAX_CCH, POWER OFFSET, PENALTY_TIME, TEMPORARY_OFFSET, CELL_RESELECT_OFFSET, le niveau de réception Rx n'étant pas modifiable.

Les paramètres de sélection et resélection utilisés pour déterminer C1 et C2 sont donnés à titre indicatif. Il est bien entendu que l'opérateur peut modifier tout autre paramètre de sélection ou resélection.

Dans l'invention, avant de modifier les valeurs des paramètres de sélection de la cellule testée, c'est-à-dire la cellule dans laquelle se trouve le téléphone mobile, l'opérateur peut simuler cette modification. Pour cela, une valeur prédéfinie du paramètre de sélection est imposée au téléphone mobile de test qui réagit comme s'il recevait du réseau cette valeur de paramètre de sélection. L'opérateur peut ensuite réaliser une séance de capture des données de couverture et en déduire les résultats par analyse et traitement des données capturées. Lorsque plusieurs simulations ont été faites, on peut en déduire quel est le dimensionnement le plus favorable pour la cellule testée.

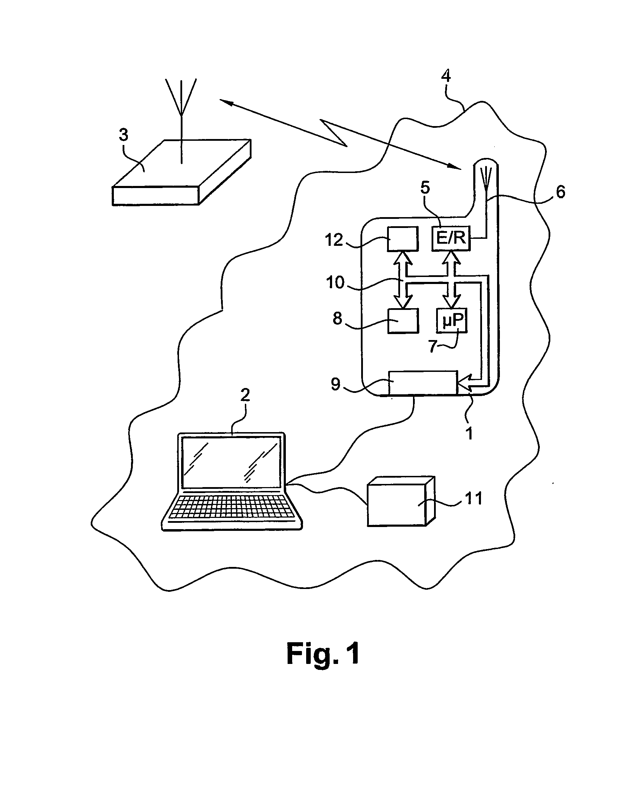

La figure 1 représente le système de test d'un réseau de téléphonie mobile selon l'invention. Ce système de test comporte un téléphone mobile de test 1, connecté à un ordinateur 2 de type PC. De préférence, l'ordinateur 2 est un ordinateur portable. L'ensemble téléphone mobile et ordinateur est embarqué, par exemple, dans un véhicule automobile.

Le téléphone mobile de test 1 est réalisé suivant la même architecture qu'un téléphone mobile usuel. Il comporte donc un dispositif d'émission/réception 5 lui permettant d'être connecté radio-électriquement à un réseau de téléphonie mobile par l'intermédiaire de la station de base 3.

Sur la figure 1, le téléphone mobile est représenté à l'intérieur d'un espace 4. Cet espace 4 représente schématiquement une cellule du réseau de téléphonie mobile à optimiser.

Le dispositif d'émission/réception 5 est relié également à l'antenne 6 du téléphone mobile. Le téléphone mobile 1 comporte aussi un microprocesseur 7 commandé par un programme dans une mémoire de programme 8 et un bus 10 de données et de commande assurant une communication entre les différents éléments du téléphone. Le téléphone mobile comporte également une interface 9 permettant de connecter le téléphone mobile à des dispositifs extérieurs. Dans l'invention, cette interface permet de connecter le téléphone mobile de test à l'ordinateur 2.

Le téléphone mobile de test, selon l'invention, comporte un circuit de forçage 12, connecté par le bus 10 aux autres dispositifs du téléphone mobile. Ce circuit de forçage 12 lui permet de recevoir et de mémoriser des valeurs transmises par l'ordinateur 2. Ces valeurs, dans l'invention, sont des valeurs prédéfinies du ou des paramètres de sélection de la cellule à tester, préalablement mémorisées dans l'ordinateur..

Ainsi, le téléphone mobile du système de l'invention peut, soit être en mode normal et recevoir les valeurs des paramètres de sélection depuis le réseau de téléphonie mobile, soit être en mode forcé et recevoir les valeurs prédéfinies des paramètres de sélection fournies par l'ordinateur. Lorsque le téléphone mobile est en mode forcé, la fonction de forçage écrase les valeurs des paramètres reçues du réseau et remplace ces valeurs par les valeurs prédéfinies transmises par l'ordinateur.

De cette façon, l'utilisateur du téléphone mobile de test peut tester une valeur prédéfinie de paramètres de sélection pour chaque cellule, sans que les autres téléphones mobiles situés dans la même cellule ne soient soumis à ces valeurs de paramètres.

Le système de test de l'invention comporte également un dispositif de localisation 11 du type GPS. Ce dispositif GPS 11 permet de repérer géographiquement les cellules testées par rapport à la cartographie. Ce dispositif GPS peut être soit un élément distinct, connecté à l'ordinateur, comme montré sur la figure 1, soit un dispositif intégré au véhicule automobile, soit un logiciel intégré dans l'ordinateur.

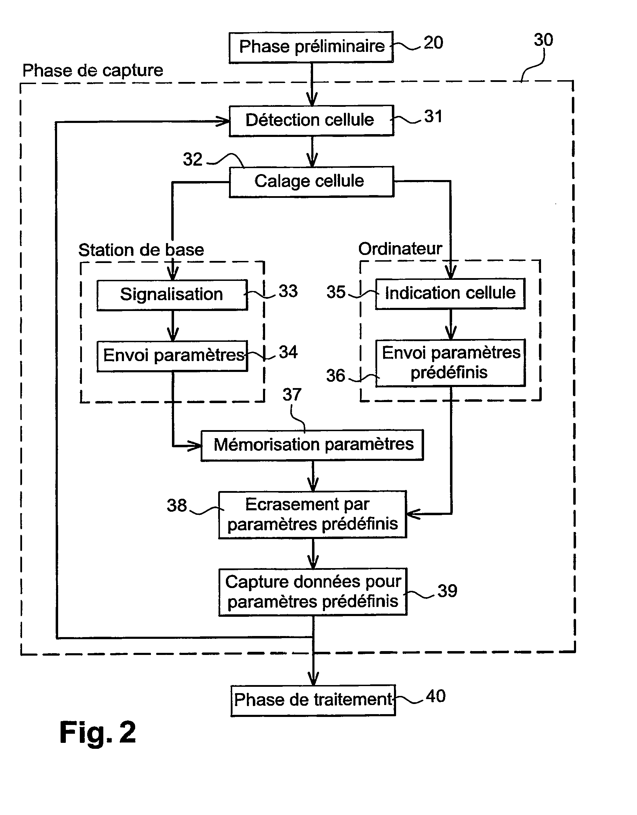

La figure 2 montre un diagramme fonctionnel du procédé de l'invention mis en oeuvre par le système qui vient d'être décrit. Ce procédé comporte trois phases : une phase préliminaire 20, une phase de capture 30 et une phase de traitement 40.

La phase préliminaire 20 est une étape de configuration des cellules que l'on souhaite tester et des valeurs des paramètres de sélection de ces cellules. Ces valeurs choisies sont des valeurs prédéfinies pour lesquelles on souhaite analyser le comportement du mobile. Ces valeurs prédéfinies sont enregistrées dans l'ordinateur, dans une mémoire spécifique. Plus précisément, cette phase préliminaire 20 consiste à configurer, dans le logiciel de l'ordinateur destiné à être connecté au téléphone mobile de test, la zone que l'utilisateur prévoit de traverser avec le téléphone mobile de test lors du test, c'est-à-dire lors de la phase de capture 30, ainsi que les paramètres de sélection des cellules de cette zone que l'utilisateur souhaite tester. Autrement dit, on configure, dans le logiciel de l'ordinateur, les valeurs des paramètres de sélection de toutes les cellules sur lesquelles le téléphone mobile est susceptible de se caler, appelées cellules serveuses, ainsi que toutes les cellules voisines de ces cellules serveuses.

Cette phase préliminaire peut être exécutée dans n'importe quel lieu, par exemple, dans le centre de gestion du réseau ou bien au domicile de l'utilisateur ou dans tout autre lieu de travail de l'utilisateur.

La phase suivante du procédé de l'invention est une phase de capture 30. Pendant cette phase de capture, l'utilisateur parcourt la zone de test prévue avec son téléphone mobile de test et l'ordinateur embarqué. Le logiciel de l'ordinateur identifie, en permanence, à partir des données du mobile, la cellule serveuse et les cellules voisines (étape 31). A chaque fois que le logiciel détecte une nouvelle cellule (étape 32), il va lire dans sa mémoire les valeurs des paramètres à forcer (étape 33) puis l'ordinateur va envoyer ces paramètres au mobile (étape 34) et enfin le mobile va forcer les valeurs des paramètres dans ses mémoires en remplacement des valeurs reçues du réseau (étape 35). Dès que ce forçage est effectué, le mobile revient à la phase de détection de nouvelle cellule (étape 31).

Ce procédé permet de forcer les paramètres dans le mobile uniquement lors de l'entrée d'une cellule dans la liste des voisines et ensuite de laisser le mobile effectuer son algorithme de resélection selon les paramètres forcés et non selon les paramètres reçus du réseau. Le mobile adoptera ce comportement lors de la phase de capture des données où l'utilisateur parcourt la zone prévue (étape 36).

La phase de capture des données consiste à enregistrer conjointement l'identification de la cellule serveuse et des cellules voisines avec les données de localisation pour chaque point de capture.

Le procédé permet également d'enregistrer, pour chaque capture, les paramètres physiques de base tels que le niveau de réception, les coefficients C1 et C2 et toutes autres traces relatives aux cellules serveuse et voisines.

Dans cette phase de capture, le téléphone mobile transmet à l'ordinateur toute la table des mesures qu'il a effectuées. L'ordinateur sait ainsi, en permanence, quels canaux sont reçus par le téléphone mobile, c'est-à-dire dans quelle cellule se trouve le téléphone mobile. Comme à chaque canal correspond un jeu de paramètres prédéfinis à tester, l'ordinateur sait précisément quelles valeurs de paramètres il doit transmettre au téléphone mobile.

Cette table des mesures peut comporter, par exemple, la liste des différents canaux, avec la serveuse et ses voisines. Elle peut comporter aussi, pour chacun de ces canaux, leur niveau de réception RX, leur seuil RM ainsi que les valeurs des coefficients C1, C2, C31 et C32 calculés par le téléphone mobile.

Le véhicule, dans lequel est embarqué le téléphone mobile de test et l'ordinateur, circule à travers toute une zone géographique et, par conséquent, à travers plusieurs cellules. Il est ainsi possible de déterminer le dimensionnement de toutes les cellules de la zone dans laquelle se déplace le véhicule.

Le procédé de l'invention se termine par une phase de traitement 40. Pendant cette phase de traitement, l'ordinateur traite les données capturées par le mobile et en déduit le dimensionnement de chacune des cellules testées. On identifie ainsi les dimensions des zones de couverture des différentes cellules de la zone parcourue, par exemple, sur fond cartographique. Ceci est réalisé en utilisant, conjointement aux données capturées, les données fournies par le GPS. Il reste ensuite à choisir, en fonction des différentes valeurs de paramètres, la valeur optimum, selon des critères de qualité prédéfinis.

Comme on le comprend à la lecture de ce qui précède, le procédé de l'invention peut être mis en oeuvre pour un seul paramètre de sélection à tester ou pour plusieurs paramètres de sélection d'une même cellule. En combinant le dimensionnement de toutes les cellules de la zone, l'opérateur peut optimiser cette zone, puis combiner cette zone avec toutes les zones qui ont été testée de la même manière pour optimiser l'ensemble du réseau de téléphonie mobile.

Pour augmenter encore le nombre de valeurs de paramètres testés en un seul parcours, il est possible de mettre le procédé de l'invention en oeuvre avec plusieurs téléphones mobiles de test simultanément. Le système de l'invention comporte alors plusieurs téléphones mobiles de test connectés à un même ordinateur, par exemple trois ou quatre téléphones mobiles. Dans ce cas, le même ordinateur fournit, à chaque téléphone mobile de test, des valeurs prédéfinies de paramètres, différentes pour chaque téléphone. Ce système présente l'avantage de permettre, en un seul parcours de la zone à optimiser, de tester plusieurs jeux de paramètres et donc de déterminer plusieurs configurations possibles pour une même zone géographique.

Dans ce système à plusieurs téléphones mobiles, il est possible également de forcer le même jeu de paramètres pour chaque téléphone et, ensuite, d'effectuer une moyenne des résultats obtenus afin d'obtenir une valeur plus précise de la mesure.

Le procédé de l'invention peut être mis en oeuvre, comme décrit précédemment, pour les paramètres permettant de déterminer le coefficient C1. Il peut aussi être mis en oeuvre pour les paramètres permettant de déterminer le critère de resélection C2. Ce coefficient C2 permet de prendre en considération la vitesse de déplacement du téléphone mobile.

Pour cela, le coefficient C2 fait intervenir une temporisation et une pénalisation. La pénalisation TO (Temporary offset) consiste à diminuer volontairement le niveau de réception de chaque cellule, d'un certain nombre de dB, pendant une temporisation PT(PENALTY TIME). Par exemple, on peut appliquer une pénalisation de -10dB pendant 20 secondes à certaines cellules. Ainsi, lorsque le téléphone mobile se déplace rapidement dans une zone, il peut traverser la cellule pendant les 20 secondes ce qui signifie que, à la fin de ces 20 secondes, le téléphone mobile sera sorti de la cellule. Comme il a une pénalisation de -10 dB, le téléphone mobile n'aura pas considéré cette cellule comme celle ayant le meilleur coefficient C1 et ne se sera pas calé dessus. Par contre, si à la fin de la temporisation de 20 secondes le téléphone est toujours dans la même cellule, alors le téléphone se cale sur cette cellule puisque la pénalisation est terminée. On peut ainsi en déduire si la cellule traversée par le téléphone mobile est une petite cellule ou une grande cellule et/ou si elle est traversée rapidement ou lentement.

Cette temporisation PT et cette pénalisation TO sont également des paramètres de resélection, particuliers à chaque cellule. Ils peuvent donc être forcés selon le procédé de l'invention. De même, les paramètres de resélection CRO (cell-reselect-offset) ou CRH (cell-reselect-hysteresis) ou CRPI (cell-reselect-param-ind) peuvent être forcés selon le procédé de l'invention. Par exemple, le paramètre CRH permet de pénaliser une cellule par rapport à une autre, soit dans le cas de changement de zone de localisation en GSM, soit simplement en cas de changement de cellule en transfert GPRS. En effet, un téléphone mobile qui passe d'une zone de localisation à une autre émet une signalisation à chaque changement de zone . Cette signalisation entraîne l'immobilisation de la ressource pendant un certain temps. Si plusieurs téléphones mobiles émettent leur signalisation simultanément, alors il est important de minimiser la signalisation et pour cela de diminuer le nombre de passages d'une cellule à une autre. Dans ce cas, le paramètre CRH peut peut être augmenté pour permettre de pénaliser l'accrochage de la nouvelle cellule par rapport à l'ancienne cellule, de façon à être bien sûr que la nouvelle cellule ait vraiment un meilleur C1 que l'ancienne. Si la nouvelle cellule n'a pas un meilleur coefficient C1 que l'ancienne cellule, alors le changement des cellules ne se fait pas et le téléphone mobile n'émet pas de signalisation.

Dans toute la description qui précède, les paramètres de sélection ou resélection qui ont été donnés en exemple sont des paramètres propres au mode GSM. Il est à noter que tous les modes de transmission ont des paramètres de sélection ou resélection qui peuvent être modifiés. Par exemple, dans le mode GPRS, les paramètres de sélection sont HCS-THR, GPRS-TEMPORARY-OFFSET, ou GPRS-PENALTY-TIME ou encore PRIORITY-CLASS, etc. Le procédé de l'invention peut être mis en oeuvre pour tous les modes de transmission et pour tous les paramètres de sélection et re-sélection

Le procédé et le système de l'invention présentent l'avantage de permettre une évaluation des différentes valeurs de paramètres de sélection ou resélection sans nécessiter la modification de ces paramètres dans le réseau pour toute la zone testée, c'est-à-dire sans perturbation du réseau. Il permet également l'évaluation des différentes valeurs de paramètres de sélection sans nécessité de coordination entre les différentes équipes techniques de l'opérateur, c'est-à-dire entre l'utilisateur du téléphone mobile de test et les personnes situées dans le centre de contrôle du réseau.

## Revendications

1. Système de test d'un réseau de téléphonie mobile ayant une pluralité de cellules (4) dont le dimensionnement est fonction d'au moins un paramètre de sélection ou de resélection, comportant un téléphone mobile de test (1) et un ordinateur (2) embarqué connecté au téléphone mobile (1), **caractérisé en ce que** des valeurs prédéfinies des paramètres de sélection et resélection sont mémorisées dans l'ordinateur et **en ce que** le téléphone mobile comporte une fonction de forçage (12) pour recevoir la valeur prédéfinie des paramètres de sélection et resélection.

2. Système de test selon la revendication 1 , **caractérisé en ce qu'**il comporte un GPS (11) embarqué associé au téléphone mobile et à l'ordinateur.

3. Système de test selon l'une quelconque des revendications 1 et 2, **caractérisé en ce que** le paramètre de sélection ou resélection est un paramètre permettant de déterminer le coefficient C1 ou C2, pour le mode GSM, ou le coefficient C31 ou C32, pour le mode GPRS.

4. Système de test selon l'une quelconque des revendications 1 à 3, **caractérisé en ce que** plusieurs téléphones de test sont connectés au même ordinateur.

5. Procédé de test d'un réseau de téléphonie mobile ayant une pluralité de cellules dont le dimensionnement est fonction d'au moins un paramètre de sélection ou resélection, **caractérisé en ce qu'**il comporte les étapes suivantes :
- enregistrement (20), dans l'ordinateur, de valeurs prédéfinies des paramètres de sélection et resélection pour chaque cellule à tester,
- forçage (38), pour chaque cellule à tester, des valeurs prédéfinies des paramètres de sélection et resélection, et capture (39) des données obtenues par le téléphone mobile pour chaque cellule,
- traitement (40) des données capturées et détermination du dimensionnement de chaque cellule.

6. Procédé selon la revendication 5, **caractérisé en ce que** le forçage de la valeur d'un paramètre de sélection ou resélection consiste à écraser la valeur du paramètre de sélection ou resélection reçue du réseau par la valeur prédéfinie du paramètre de sélection ou resélection.

7. Procédé selon la revendication 5 ou 6, **caractérisé en ce que**, lorsque toutes les cellules ont été dimensionnées, une optimisation du réseau est établie.

8. Procédé selon l'une quelconque des revendications 5 à 7, **caractérisé en ce que** les valeurs de plusieurs paramètres de sélection ou resélection sont forcées simultanément pour une même cellule.

9. Procédé selon l'une quelconque des revendications 5 à 8, **caractérisé en ce que** plusieurs valeurs du même paramètre de sélection ou resélection sont forcées simultanément, pour une même cellule, sur plusieurs téléphones de test.

10. Procédé selon l'une quelconque des revendications 5 à 8, **caractérisé en ce que** la valeur du paramètre de sélection ou resélection pour une même cellule, est forcée simultanément sur plusieurs téléphones de test et les données capturées par ces téléphones de test sont moyennées.

## Claims

1. System for testing a mobile telephony network having a plurality of cells (4) whose sizing is a function of at least one selection or reselection parameter, the system comprising a mobile test telephone (1) and an embedded computer (2) connected to the mobile telephone (1), **characterised in that** predefined values of the selection and reselection parameters are stored in the computer and **in that** the mobile telephone comprises a presetting function (12) to receive the predefined value of the selection and reselection parameters.

2. Testing system according to claim 1, **characterised in that** it comprises an embedded GPS (11) associated with the mobile telephone and the computer.

3. Testing system according to one of the claims 1 and 2, **characterised in that** the selection or reselection parameter is a parameter that can be used to determine the coefficient C1 or C2 for the GSM mode or the coefficient C31 or C32 for the GPRS mode

4. Testing system according to any of the claims 1 to 3, **characterised in that** several testing telephones are connected to the same computer.

5. Method for testing a mobile telephony network having a plurality of cells (4) whose sizing is a function of at least one selection or reselection parameter, **characterised in that** it comprises the following steps:
- the recording (20) in the computer of predefined values of the selection and reselection parameters for each cell to be tested,
- the presetting (38), for each cell to be tested, of the predefined values of the selection and reselection parameters, and the picking up (39) of the data obtained by the mobile telephone for each cell,
- the processing (40) of the data picked up and the determining of the sizing of each cell.

6. Method according to claim 5, **characterised in that** the presetting of the value of a selection or reselection parameter consists in overwriting the value of the selection or reselection parameter received from the network with the predefined value of the selection or reselection parameter.

7. Method according to claim 5 or 6, **characterised in that**, when all the cells have been sized, an optimisation of the network is set up.

8. Method according to any of the claims 5 to 7, **characterised in that** the values of several selection or reselection parameters are set simultaneously for a same cell.

9. Method according to any of the claims 5 to 8, **characterised in that** several values of the same selection or reselection parameter are preset simultaneously, for a same cell, on several test telephones.

10. Method according to any of the claims 5 to 8, **characterised in that** the value of the selection or reselection parameter for a same cell is preset simultaneously on several tests telephones and the pieces of data picked up by these test telephones are averaged.

## Patentansprüche

1. Testsystem für ein Mobiltelefonnetz mit einer Vielzahl von Zellen (4), deren Dimensionierung mindestens von einem Wahl- oder Wiederwahlparameter abhängt, umfassend ein Testmobiltelefon (1) und einen eingebauten Computer (2), der an das Mobiltelefon (1) angeschlossen ist, **dadurch gekennzeichnet, dass** die vordefinierten Werte der Wahl- und Wiederwahlparameter in dem Computer gespeichert sind, und dass das Mobiltelefon eine Forcierfunktion (12) umfasst, um den vordefinierten Wert der Wahl- und Wiederwahlparameter zu empfangen.

2. Testsystem nach Anspruch 1, **dadurch gekennzeichnet, dass** es ein eingebautes GPS (11) in Verbindung mit dem Mobiltelefon und dem Computer umfasst.

3. Testsystem nach einem der Ansprüche 1 und 2, **dadurch gekennzeichnet, dass** der Wahl- oder Wiederwahlparameter ein Parameter ist, der es ermöglicht, den Koeffizienten C1 oder C2 für den GSM-Modus oder den Koeffizienten C31 oder C32 für den GPRS-Modus zu bestimmen.

4. Testsystem nach einem der Ansprüche 1 bis 3, **dadurch gekennzeichnet, dass** mehrere Testsysteme an denselben Computer angeschlossen sind.

5. Testverfahren für ein Mobiltelefonnetz mit einer Vielzahl von Zellen, deren Dimensionierung von mindestens einem Wahl- oder Wiederwahlparameter abhängt, **dadurch gekennzeichnet, dass** es die folgenden Schritte umfasst:
- Aufzeichnung (20) von vordefinierten Werten der Wahl- oder Wiederwahlparameter im Computer und Wiederwahl für jede zu testende Zelle,
- für jede zu testende Zelle Forcieren (38) der vordefinierten Werte der Wahl- und Wiederwahlparameter und Erfassen (39) der erhaltenen Daten durch das Mobiltelefon für jede Zelle,
- Verarbeitung (40) der erfassten Daten und Bestimmen der Dimensionierung jeder Zelle.

6. Verfahren nach Anspruch 5, **dadurch gekennzeichnet, dass** das Forcieren des Werts eines Wahl- oder Wiederwahlparameters darin besteht, den Wert des Wahl- oder Wiederwahlparameters, der vom Netz erhalten wurde, durch den vordefinierten Wert des Wahl- oder Wiederwahlparameters zu überschreiben.

7. Verfahren nach Anspruch 5 oder 6, **dadurch gekennzeichnet, dass**, wenn alle Zellen dimensioniert sind, eine Optimierung des Netzes vorgenommen wird.

8. Verfahren nach einem der Ansprüche 5 bis 7, **dadurch gekennzeichnet, dass** die Werte von mehreren Wahl- oder Wiederwahlparametern gleichzeitig für eine selbe Zelle forciert werden.

9. Verfahren nach einem der Ansprüche 5 bis 8, **dadurch gekennzeichnet, dass** mehrere Werte desselben Wahl- oder Wiederwahlparameters gleichzeitig für eine selbe Zelle auf mehreren Testtelefonen forciert werden.

10. Verfahren nach einem der Ansprüche 5 bis 8, **dadurch gekennzeichnet, dass** der Wert des Wahl- oder Wiederwahlparameters für eine selbe Zelle gleichzeitig auf mehreren Testtelefonen forciert und die von diesen Testtelefonen erfassten Daten im Durchschnitt genommen werden.
